**Europäisches Patentamt**

**European Patent Office**

**Office européen des brevets**

(11) Veröffentlichungsnummer: **0 100 880**
**B1**

(12) # EUROPÄISCHE PATENTSCHRIFT

(45) Veröffentlichungstag der Patentschrift:
**04.10.89**

(51) Int. Cl.⁴: **B 60 N 1/08**

(21) Anmeldenummer: **83106691.5**

(22) Anmeldetag: **06.07.83**

(54) Sitzschiene zur Längsverstellung von Sitzen, insbesondere Kraftfahrzeugsitzen.

(30) Priorität: **16.07.82 DE 3226585**

(43) Veröffentlichungstag der Anmeldung:
**22.02.84 Patentblatt 84/8**

(45) Bekanntmachung des Hinweises auf die Patenterteilung:
**04.10.89 Patentblatt 89/40**

(84) Benannte Vertragsstaaten:
**FR GB IT**

(56) Entgegenhaltungen:
**EP-A-0 037 726**
**EP-A-0 076 041**
**FR-A-2 210 954**
**FR-A-2 393 695**
**FR-A-2 510 952**
**US-A-2 706 959**
**US-A-2 780 501**

(73) Patentinhaber: **KEIPER RECARO GmbH & Co.,
Büchelstrasse 54- 58, D-5630 Remscheid 14 (DE)**

(72) Erfinder: **Klüting, Bernd, Ing. grad., Jung- Stilling-
Weg 18, D-5606 Radevormwald (DE)**

(74) Vertreter: **Buse, Karl Georg, Dipl.- Phys.,
Patentanwälte Dipl.- Phys. Buse Dipl.- Phys.
Mentzel Dipl.- Ing. Ludewig Unterdörnen 114,
D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine Sitzschiene zur Längsverstellung von Sitzen, insbesondere Kraftfahrzeugsitzen, die als Verbindungsglied zwischen dem Fahrzeugboden und dem Sitzteil eingesetzt sind und eine aus zwei Winkelprofilen zu einer T-Schiene zusammengesetzte, einen integrierten Anschlußflansch aufweisende Laufschiene aufweist, die teilweise von einer aus zwei sich zu einem C-förmigen Profilquerschnitt ergänzenden, einen integrierten Anschlußflansch aufweisenden Profilstäben zusammengesetzten Führungsschiene umgriffen ist.

Bekannte Sitzschienen bestehen üblicherweise aus einem mit dem Fahrzeugboden oder einer dem Fahrzeugboden zugeordneten Konsole verbundenen U-Profil, welches als Führungsschiene für eine, ebenfalls einen im wesentlichen U-förmigen Querschnitt aufweisende Laufschiene dient. Diese Laufschiene übergreift beispielsweise die Führungsschiene und ist an dieser durch zwischengeschaltete Kugelreihen abgestützt. Zur Bildung dieser Kugelreihen ist sowohl die Führungsschiene als auch die Laufschiene mit Kugellaufbahnen versehen. Während nun die Führungsschiene in fester Verbindung mit dem Fahrzeugboden steht, ist an der Laufschiene der Sitzteil gegebenenfalls unter Zwischenschaltung einer Höhenstelleinrichtung befestigt, wie dies beispielsweise aus der DE-A-2 306 535 ersichtlich ist.

Außerdem ist eine Führungsschiene bekannt, wie sie z. B. bei der DE-OS-3 225 546 eingesetzt ist, die einen C-förmigen und oberseitig offenen Profilquerschnitt aufweist, in welchen eine im wesentlichen T-förmige Laufschiene eingreift. Diese in die Führungsschiene eingreifende Laufschiene ist auf zwischen der Laufschiene und der Führungsschiene angeordneten Rollkörpern, beispielsweise in Form von Walzen, abgestützt. Dabei sind zur Stabilitätserhöhung die Stützschenkel der Laufschiene winkelförmig nach oben abgebördelt und werden von der Führungsschiene umfaßt. Der aus der Führungsschiene herausragende Teil der Laufschiene stellt einen Anschlußflansch zur Befestigung der Höhenstelleinrichtung oder gar des Sitzteiles selbst dar. Mit diesem Anschlußflansch der Laufschiene lassen sich Höhenstelleinrichtungen oder Sitzrahmenteile selbst ohne Zwischenschaltung weiterer Anschlußbauteile direkt verbinden.

Eine ähnliche Ausführung der Führungsschiene ist auch aus der FR-A-2 393 695 ersichtlich, die aber eine ebene Unterseite aufweist und unmittelbar auf dem Fahrzeugboden mit ihrer gesamten Länge aufliegt, oder aber auf am Fahrzeugboden befestigten Stützkonsolen selbst aufliegt. Diese Stützkonsolen stellen dann gegenüber der Führungsschiene eigenständige Bauteile dar.

Die Aufgabe der Erfindung besteht darin, eine Sitzschiene der eingangs genannten Art zu schaffen, die neben ihrer Funktion als Längsverstellglied zwischen dem Sitzteil und dem Fahrzeugboden und außer ihrer Integration zwischen dem Sitzteil und dem Fahrzeugboden ohne Zwischenschaltung besonderer Anschlußbauteile insbesondere die über die Sitzschiene abzuleitenden Kräfte ohne Umsetzung in ihrer Wirkungslinie beläßt und Torsionsmomente nicht auftreten.

Diese Aufgabe ist erfindungsgemäß dadurch gelöst, daß die Führungsschiene aus zwei Z-förmigen Profilstäben mit oberseitiger Abwinklung und einem senkrecht nach unten ragenden Anschlußflansch zusammengesetzt ist. Bei einer derartigen, als Vollintegrationsschiene ausgebildeten Sitzschiene läßt sich außer ihrem Oberteil auch deren Unterteil als Funktionsbrücke zum Bodenblech oder zu den seitlichen Schwellern einsetzen.

Die variable Austauschbarkeit der Schienenelemente erlaubt die jeweils wirtschaftlichste Lösung in Bezug auf Belastung in Form von Gurtkräften und Gewicht einzusetzen. Dabei läßt sich die jeweilige Belastung über den Formschluß der Profile vom Sitzteil ohne nennenswerte Torsionsmomente in das Bodenblech übertragen. Dies wird insbesondere dann erreicht, wenn, wie nach einem Ausgestaltungsmerkmal der Erfindung vorgeschlagen, die die Führungsschiene bildenden Profilstäbe aus zwei symmetrisch gleichen, jedoch spiegelbildlichen Z-Profile zusammengesetzt sind, die in ihrer Mittelebene den nach unten abragenden Anschlußflansch aufweisen.

Zur vollständig drehmomentfreien Kraftübertragung über die Sitzschiene weisen nach einem weiteren Ausgestaltungsmerkmal der Erfindung die jedem Profilstab zugehörigen Schenkel des Anschlußflansches an ihren freien Enden vorteilhaft einen Freiraum zwischen ihren Rücksprüngen auf.

Ein günstiger Materialeinsatz läßt sich vorteilhaft dadurch erzielen, daß der in der Mittelebene der Führungsschiene angeordnete, senkrecht nach unten abragende Anschlußflansch aus nur einem Schenkel eines Profilstabes gebildet ist, während der Schenkel des anderen Profilstabes unmittelbar hinter der Verbindungsstelle endet.

Um die Abwälzbahn der Rollkörper an der Lauffläche der Führungsschiene in ihrem mittleren Tragbereich unterbrechungsfrei zu gestalten, ist nach einem weiteren Ausgestaltungsmerkmal der Erfindung der senkrecht nach unten abragende Anschlußflansch der Führungsschiene aus deren Mittelebene zur Profilseitenwand hin versetzt. Dies läßt sich im Extremfall so weit fortsetzen, daß der senkrecht nach unten ragende Anschlußflansch der Führungsschiene durch einen Fortsatz einer Seitenwand gebildet ist und sich in Verlängerung dieser Seitenwand erstreckt.

Die Erfindung ist in mehreren Ausführungsbeispielen auf der Zeichnung dargestellt und wird nachfolgend näher erläutert. Es zeigen:

Fig. 1    die erfindungsgemäße Sitzschiene in einer Seitenansicht mit einem einerends angeordneten Stützfuß und einem anderenends angeordneten Anschlußflansch,

Fig. 2 die aus Fig. 1 ersichtliche Sitzschiene in einer Stirnansicht in Richtung des Pfeiles II von Fig. 1,

Fig. 3 die aus Fig. 1 ersichtliche Sitzschiene in einem Vertikalschnitt nach der Linie III - III von Fig. 1,

Fig. 4 eine symmetrisch aufgebaute Sitzschiene in einer Stirnansicht, bei der sich sowohl der Anschlußflansch der Laufschiene als auch der Anschlußflansch der Führungsschiene in einer Mittelebene befinden,

Fig. 5 eine der Fig. 4 analoge Sitzschiene, bei der jedoch die Anschlußflansche aufgeweitet sind und einen Zwischenraum zwischen ihren Schenkeln aufweisen,

Fig. 6 ein weiteres Ausführungsbeispiel einer Sitzschiene in einer Stirnansicht, bei der die Anschlußflansche aus nur einem Schenkel jeweils eines Profilstabes der die Laufschiene und die Führungsschiene bildenden Profilstäbe besteht,

Fig. 7 eine Sitzschiene in einer Stirnansicht, bei welcher der Anschlußflansch der Führungsschiene aus der Mittelebene versetzt angeordnet ist,

Fig. 8 ein weiteres Ausführungsbeispiel einer in Stirnansicht dargestellten Sitzschiene, bei welcher der Anschlußflansch der Führungsschiene eine Verlängerung einer ihrer beiden Seitenwände bildet,

Fig. 9 eine Fig. 8 analoge Sitzschiene, ebenfalls in einer Stirnansicht, bei welcher der Anschlußflansch der Führungsschiene mit einer Abwinkelung versehen ist,

Fig. 10 ein weiteres Ausführungsbeispiel einer Sitzschiene, bei welcher der Anschlußflansch der Führungsschiene aus der Mittelebene nach außen in die Ebene einer Seitenwand verkröpft ist,

Fig. 11 eine Sitzschiene, in einer Stirnansicht bei welcher infolge Profilumkehrung die Führungsschiene in die Laufschiene eingreift.

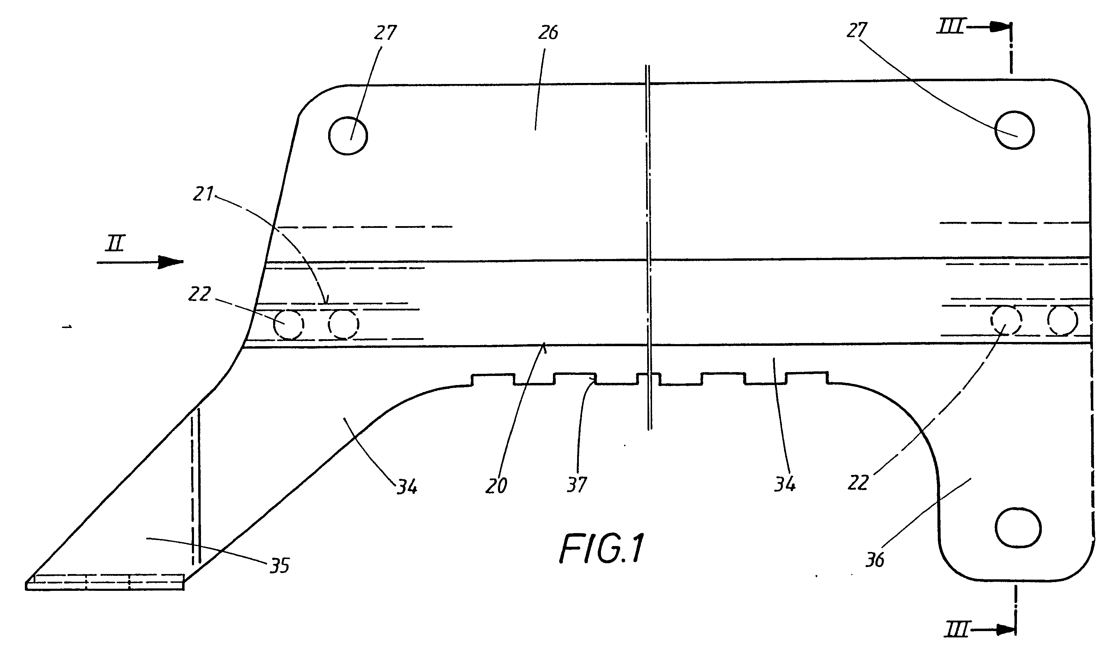

Die aus den Fig. 1 bis 3 ersichtliche Sitzschiene besteht im wesentlichen aus einer Führungsschiene 20 und aus einer darin verschiebbaren Laufschiene 21. Dabei stützt sich die Laufschiene 21 auf Rollkörpern in Form von Walzen 22 ab, die im Tragraum der Führungsschiene 20 angeordnet sind. Die Laufschiene 21 besteht aus zwei Winkelprofilen 23 und 24, deren kurze Winkelschenkel 25 U-förmig nach oben gebogen sind. Die Winkelprofile 23 und 24 sind beispielsweise durch Punktschweißung derart miteinander verbunden, daß diese miteinander verbundenen Winkelprofile einen im wesentlichen T-förmigen Profilquerschnitt ergeben. Dabei weist das Winkelprofil 24 gegenüber dem Winkelprofil 23 einen längeren nach oben aufragenden Schenkel auf, der einen Anschlußflansch 26 mit Befestigungslöchern 27 bildet.

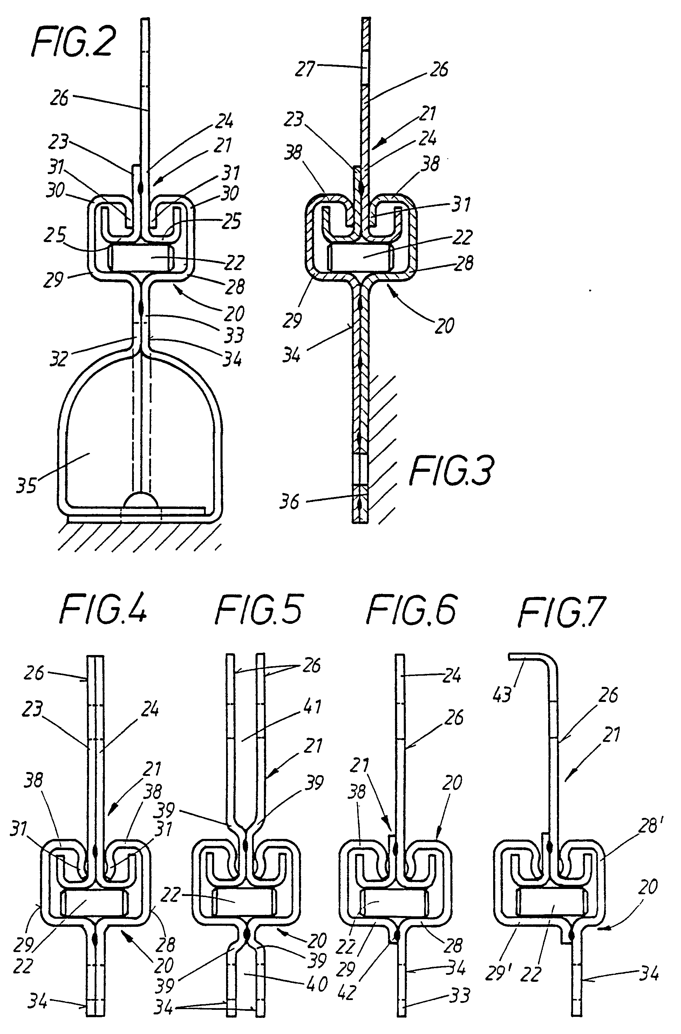

Auch die Führungsschiene 20 besteht aus zwei sich ergänzenden Profilstäben 28 und 29, die gleiche, jedoch spiegelbildliche Querschnittsform zueinander aufweisen. An jeden Profilstab 28 und 29 ist ein U-förmiger Profilteil 30 angeformt, wobei sich diese Profilteile im Verbindungszustand zu einem die Laufschiene 21 unterseitig umfassenden C-förmigen Profilquerschnitt ergänzen. Dabei mag an der den Führungsschlitz für die Laufschiene 21 bildenden, offenen Seite des C-Profilquerschnitts der Führungsschiene 20 an jedem Profilteil 30 eine einwärts gebogene Führungsleiste 31 angeformt sein. Die spiegelbildlich symmetrisch ausgebildeten Profilstäbe 28 und 29 weisen im zur Führungsschiene 20 zusammengefügten Zustand auf der dem durch die Führungsleisten 31 gebildeten Führungsschlitz gegenüberliegenden Seite Schenkel 32 und 33 auf, die einen Anschlußflansch 34 zur Befestigung der Führungsschiene 20 am Fahrzeugboden - wie in Fig. 2 durch Schraffur angedeutet - oder an einem Seitenschweller - wie in Fig. 3 durch Schraffur angedeutet - bilden. Bei dem aus den Fig. 1 bis 3 ersichtlichen Ausführungsbeispiel ist der Anschlußflansch 34 im mittleren Bereich freigeschnitten, während die Endbereiche des Anschlußflansches 34 einerends als Stützfuß 35 mit einem Anschraubauge und anderenends als Stützlamelle 36 ausgebildet sind. Dabei kann der mittlere Bereich des Anschlußflansches 34 unterseitig mit beispielsweise einer Sperrverzahnung 37 versehen sein, um den Sitz gegenüber der im Fahrzeug festgelegten Führungsschiene in der eingestellten Sitzposition arretieren zu können. Wie insbesondere aus den Fig. 3 und 4 ersichtlich ist, sind die Profilstäbe 28 und 29 als Z-Profile ausgebildet, die eine oberseitige Abwinkelung 38 aufweisen, an welche sich die nach einwärts abgebogenen Führungsleisten 31 anschliessen.

Das aus Fig. 4 ersichtliche Ausführungsbeispiel unterscheidet sich gegenüber den vorhergehenden Ausführungsbeispielen nur dadurch, daß es sich einerseits bei den Winkelprofilen 23 und 24 um exakt gleiche Profilierungen handelt und somit der Anschlußflansch 26 durch zwei aneinanderliegende und durch Schweißung miteinander verbundene Winkelschenkel handelt und daß andererseits der Anschlußflansch 34 der Führungsschiene 20 gegenüber dem aus Fig. 3 ersichtlichen Anschlußflansch verkürzt ist.

Das in Fig. 5 dargestellte Ausführungsbeispiel einer Sitzschiene entspricht im wesentlichen der aus Fig. 4 ersichtlichen Sitzschiene. Allerdings sind die Anschlußflansche 26 und 34 darstellenden Profilschenkel sowohl des Anschlußflansches 26 der Laufschiene 21 als auch des Anschlußflansches 34 der Führungsschiene 20 mit Rücksprüngen 39 versehen, wodurch zwischen den Schenkeln Freiräume 40 bzw. 41 zur Aufnahme von Anschlußbauteilen geschaffen sind.

Im Gegensatz zu den aus den Fig. 4 und 5 ersichtlichen Sitzschienen bestehen die Anschlußflansche 26 und 34 nach Fig. 6 aus nur einem einzigen Schenkel 24 bzw. 33, da der Schenkel 32 des Profilstabes 29 gegenüber dem Schenkel 33 des Profilstabes 2ô derart verkürzt ist, daß er unmittelbar hinter der beispielsweise durch Punktschweißung gebildeten Verbindungsstelle 42 endet. Das gleiche gilt auch sinngemäß für die Laufschiene 21.

Das aus Fig. 7 ersichtliche Ausführungsbeispiel einer Sitzschiene unterscheidet sich gegenüber Fig. 6 dadurch, daß die Profilstäbe 28' und 29' hinsichtlich ihrer U-Form unterschiedlich gestaltet sind. Dabei weist der Bodenbereich des aus den Profilstäben 28' und 29' gebildeten C-Profilquerschnittes unterschiedlich lange Schenkellängen auf, so daß der Anschlußflansch 34 aus der Mittelebene versetzt ist. In weiterer Unterscheidung gegenüber Fig. 6 weist das Ausführungsbeispiel gemäß Fig. 7 einen Anschlußflansch 26 auf, der an seinem freien Ende mit einer Abwinkelung 43 versehen ist.

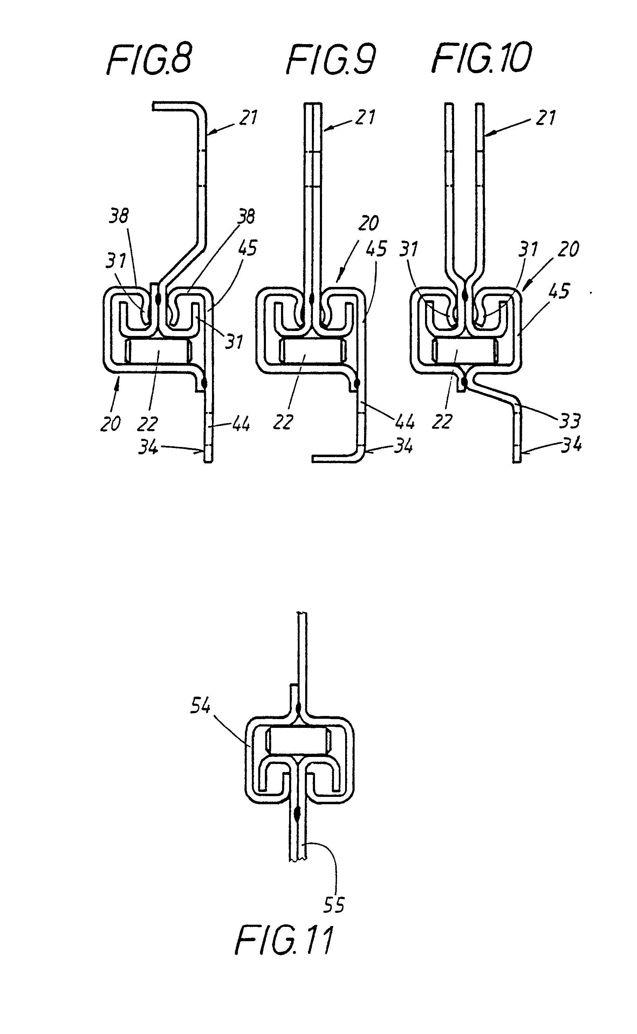

Bei den aus den Fig. 8 und 9 ersichtlichen Ausführungsbeispielen ist der senkrecht nach unten abragende Anschlußflansch in extremer Weise aus der Mittelebene versetzt, und zwar derart, daß der Anschlußflansch 34 der Führungsschiene 20 durch einen Fortsatz 44 einer Seitenwand 45 der Führungsschiene 20 gebildet ist. Dabei ist das freie Ende des Fortsatzes 44 der Führungsschiene 20 bei dem aus Fig. 9 ersichtlichen Ausführungsbeispiel zur Innenseite hin abgewinkelt.

Eine weitere Variante der Führungsschiene 20 ist aus Fig. 10 ersichtlich. Im Verbindungsbereich der Führungsschiene 20 mit der Laufschiene 21 sind die Profilstäbe der Führungsschiene 20 spiegelbildlich symmetrisch geformt, so daß eine Mitteltrennung der zu der Führungsschiene 20 miteinander verbundenen Profilstäbe gebildet ist. Dabei ist jedoch einer der beiden Profilstäbe mit einem Schenkel 33 versehen, der in eine Ebene mit der Seitenwand 45 verkröpft ist und den Anschlußflansch 34 der Führungsschiene 20 bildet.

Abgesehen von den verschiedenartigen Formen und Gestaltungen der Anschlußflansche 26 und 34 der Laufschiene 21 bzw. der Führungsschiene 20 ist es auch möglich, die Schienen zu vertauschen und als Laufschiene ein C-förmiges Profil 54 zu verwenden, während als Führungsschiene 55 ein T-Profil eingesetzt ist, das von einem C-Profil der Laufschiene 54 übergriffen ist (s. Fig. 11). Dabei ist zur Reibungsreduzierung wiederum zwischen der T-Schiene 55 und der C-Schiene 54 eine Walzenreihe 22 angeordnet, so daß bei einer Verschiebebewegung der Laufschiene 54 gegenüber der Führungsschiene 55 nur der Widerstand rollender Reibung zu überwinden ist. Statt der dargestellten Walzenreihen 22 ist es auch denkbar, entweder Zwischengleiter einzusetzen oder direkt Schiene auf Schiene gleiten zu lassen.

## Patentansprüche

1. Sitzschiene zur Längsverstellung von Sitzen, insbesondere Kraftfahrzeugsitzen, die als Verbindungsglied zwischen dem Fahrzeugboden und dem Sitzteil eingesetzt ist und eine aus zwei Winkelprofilen (23, 24) zu einer T-Schiene zusammengesetzte, einen integrierten Anschlußflansch (26) aufweisende Laufschiene (21) aufweist, die teilweise von einer aus zwei sich zu einem C-förmigen Profilquerschnitt ergänzenden, einen integrierten Anschlußflansch (34) aufweisenden Profilstäben (28, 29 bzw. 28', 29') zusammengesetzten Führungsschiene (20) umgriffen ist, dadurch gekennzeichnet, daß die Führungsschiene (20) aus Z-förmigen Profilstäben (28, 29) mit oberseitiger Abwinklung (38) und einem senkrecht nach unten ragenden Anschlußflansch (34) zusammengesetzt ist.

2. Sitzschiene nach Anspruch 1 dadurch gekennzeichnet, daß die die Führungsschiene (20) bildenden Profilstäbe (28, 29) aus zwei symmetrisch gleichen, jedoch spiegelbildlichen Z-Profilen zusammengesetzt sind, die in ihrer Mittelebene den nach unten abragenden Anschlußflansch (34) aufweisen.

3. Sitzschiene nach Anspruch 1 oder 2, dadurch gekennzeichnet, daß die jedem Profilstab (28, 29) zugehörigen Schenkel (32, 33) des Anschlußflansches (34) an ihrem freien Ende einen Freiraum (40) zwischen ihren Rücksprüngen (39) aufweisen.

4. Sitzschiene nach Anspruch 1 dadurch gekennzeichnet, daß der in der Mittelebene der Führungsschiene (20) angeordnete, senkrecht nach unten abragende Anschlußflansch (34) aus nur einem Schenkel (33) eines Profilstabes (28) gebildet ist, während der Schenkel des anderen Profilstabes (29) unmittelbar hinter der Verbindungsstelle (42) endet.

5. Sitzschiene nach Anspruch 1 dadurch gekennzeichnet, daß der senkrecht nach unten abragende Anschlußflansch (34) der Führungsschiene (20) aus deren Mittelebene zur Profilseitenwand hin versetzt ist.

6. Sitzschiene nach Anspruch 1 dadurch gekennzeichnet, daß der senkrecht nach unten abragende Anschlußflansch (34) der Führungsschiene (20) durch den Fortsatz (44) einer Seitenwand (45) gebildet ist und sich in Verlängerung dieser Seitenwand erstreckt.

## Claims

1. A seat rail for longitudinal adjustment of seats, in particular motor vehicle seats, which is fitted as a connecting member between the vehicle floor and the seat member and has a runner rail (21) which is made up from two angle portions (23, 24) to provide a T-shaped rail and which has an integrated connecting flange (26) and which is partially embraced by a guide rail (20), the guide rail (20) being made from two shaped bars (28, 29 and 28', 29' respectively) which supplement each other to define a C-shaped profile cross-section and which have an integrated connecting flange (34), characterised in that the guide rail (20) is made from Z-shaped bars (28, 29) with a bent-over portion (38) at their top side, and a perpendicularly downwardly projecting connecting flange (34).

2. A seat rail according to clam 1 characterized in that the shaped bars (28, 29) forming the guide rail (20) are made up from two Z-shaped members which are symmetrically identical but of mirror image configuration and which in their central plane have the downwardly projecting connecting flange (34).

3. A seat rail according to claim 1 or claim 2 characterised in that the limbs (32, 33) of the connecting flange (34), which are associated with each shaped bar (28, 29), have at their free ends a free space (40) between their return crank portions (39).

4. A seat rail according to claim 1 characterised in that the perpendicularly downwardly projecting connecting flange (34) which is arranged in the central plane of the guide rail (20) is formed from only one limb (33) of a shaped bar (28) while the limb of the other shaped bar (29) terminates directly behind the connecting location (42).

5. A seat rail according to claim 1 characterised in that the perpendicularly downwardly projecting connecting flange (34) of the guide rail (20) is displaced out of the central plane thereof towards the side wall of the shaped member.

6. A seat rail according to claim 1 characterised in that the perpendicularly downwardly projecting connecting flange (34) of the guide rail (20) is formed by the continuation (44) of a side wall (45) and extends in line with said side wall.

**Revendications**

1. Glissière de siège pour le réglage longitudinal de sièges, en particulier de sièges de véhicules automobiles, qui est utilisée comme organe de liaison entre le plancher du véhicule et la partie de siège et présente une glissière mobile (21) présentant un rebord de raccordement (26) intégré composé de deux profilés d'angle ou de cornière (23, 24) réunis pour former une glissière en T, qui est partiellement entourée par une glissière de guidage (20) composée de deux barres profilées (28, 29 ou 28', 29') assembles se complétant pour former une section transversale de profilé en forme de C et présentant un rebord de raccordement (34) intégré, caractérisée en ce que la glissière de guidage (20) est composée de barres profilées (28, 29) en forme de Z ayant un rabattement (38) sur le côté supérieur et un rebord de raccordement (34) émergeant verticalement vers le bas.

2. Glissière de siège selon la revendication 1, caractérisée en ce que les barres profilées (28, 29) formant la glissière de guidage (20) sont composées de deux profilés en Z identiques, en symétrie plane ou spéculaire, présentant dans leur plan médian le rebord de raccordement (34) faisant saillie vers le bas.

3. Glissière de siège selon la revendication 1 ou 2, caractérisé en ce que les côtées (32, 33) du rebord de raccordement (34) affectés à chaque barre profilée (28, 29) présentent à leur extrémité libre un espace libre (40) entre leurs ailes (39).

4. Glissière de siège selon la revendication 1, caractérisée en ce que le rebord de raccordement (34) disposé dans le plan médian de la glissière de guidage (20) et faisant saillie verticalement vers le bas est formé d'une seule aile (33) d'une barre profilée (28), tandis que l'aile de l'autre barre profilée (29) se termine directement derrière le ponit de liaison (42).

5. Glissière de siège selon la revendication 1, caractérisée en ce que le rebord de raccordement (34), faisant saillie verticalement vers le bas, de la glissière de guidage (20) est décalé de son plan médian par rapport à la paroi latérale profilée.

6. Glissière de siège selon la revendication 1, caractérisée en ce que le record de raccordement (34), faisant saillie verticalement vers le bas, de la glissière de guidage (20) est formé par le prolongement (44) d'une paroi latérale (45) et s'étend dans le prolongement de cette paroi latérale.

FIG.1

FIG.2

FIG.3

FIG.4    FIG.5    FIG.6    FIG.7

# FIG.8   FIG.9   FIG.10

# FIG.11